# EUROPÄISCHE PATENTANMELDUNG

(11) **EP 0 561 014 A1**
(43) Veröffentlichungstag der Anmeldung: **22.09.1993**
(21) Anmeldenummer: 92104527.4
(22) Anmeldetag: 16.03.1992
(51) Int. Cl.: F16J 15/42

(54) **Dynamische, berührungsfreie Dichtung**

(71) Anmelder: BECKER VERFAHRENSTECHNIK, DIPL. ING. ERNST BECKER GmbH & CO KG, D-71404 Korb (DE)
(72) Erfinder: Becker, Ernst, W-7054 Korb (DE); Lacroix, Andre, W-7057 Winnenden (DE)
(74) Vertreter: Alber, Norbert

(57) **Zusammenfassung**

Insbesondere bei Abscheidevorrichtungen besteht das Problem, zwischen zwei Bereichen mit unterschiedlichem Druckniveau eine Abdichtung zwischen einem feststehenden und einem rotierenden Teil vorzunehmen, die darüberhinaus absolut verschleißfrei sein soll.

Eine solche Dichtung kann als berührungslose Dichtung ausgebildet werden, wobei in einem Innendurchmesser eine Ringnut eingearabeitet ist, deren offene Seite konzentrisch zur Rotationsachse liegt und aus der Richtung der Rotationsachse ein ringförmiger Trennflansch in den Ringraum der Ringnut eintaucht, dessen Außenflächen einen geringen Abstand zu den Innenflächen einhalten.

Bei Rotation der Ringnut stellt eine in die Ringnut eingebrachte Fluidfüllung dar, in die der Trennflansch eintaucht, wodurch die Bereiche auf den gegenüberliegenden Seiten des Trennflansches druckdicht und ohne Berührung von Feststoffen und damit verschleißfrei voneinander getrennt werden.

## Beschreibung

Die Erfindung betrifft eine berührungslose, dynamische Dichtung, wie sie zum Abdichten eines rotierenden gegenüber einem nicht rotierenden Bauteil notwendig ist. Auch für dynamische Abdichtungsfälle werden vornehmlich berührende Dichtungen wie etwa O-Ring-Dichtungen oder Dichtlippen eingesetzt, die mit einem der beiden sich zueinander relativ bewegenden Teile fest verbunden sind und auf dem anderen Teil in Anlage schleifen. Dadurch tritt naturgemäß ein hoher Verschleiß an diesen Dichtelementen auf, was eine vergleichsweise niedrige Lebensdauer mit sich bringt. Um dem abzuhelfen, können zwar Schmiermittel etc. an der Gleitreibungsstelle eingesetzt werden, was jedoch - je nach Einsatzzweck der Dichtung - bereits aus Verunreinigungsgründen nicht immer möglich ist und zumindest einen erhöhten Wartungsaufwand erfordert.

Weiterhin sind auch bereits berührungslose Dichtungen für dynamische Abdichtungsflälle bekannt, beispielsweise Labyrinthdichtungen. Dabei sind die beiden relativ zueinander bewegten Teile in ihrer Querschnittsform exakt aneinander angepaßt, so daß ein gleichbleibender, möglichst schmaler, Dichtungsspalt zwischen den beiden Teilen verbleibt, der eine möglichst umfangreiche Zick-Zack-Form besitzen soll, da jede zusätzliche Windung der Labyrinthdichtung die Wahrscheinlichkeit des Hindurchtretens von unerwünschtem Medium verhindert.

Derartige Labyrinthdichtungen müssen jedoch relativ genau gefertigt werden und das rotierende Teil muß ausreichend exakt gelagert sein, um die gewünschten Toleranzen während der Rotation einzuhalten.

Da der Durchtritt von unerwünschtem Material dennoch nie ganz ausgeschlossen werden kann, weisen derartige Labyrinthdichtungen in der Regel zusätzlich einen mechanischen Schleifring in Form eines Filzringes oder ähnlichem auf, der dem mechanischen Aufnehmen hindurchgetretenen Materials dient.

Zusätzlich können derartige berührungsfreie Labyrinthdichtungen auch keine druckdichte Trennung zweier Bereiche mit unterschiedlichem Druckniveau gewährleisten, da durch den Dichtungsspalt hindurch ein Druckausgleich möglich bleibt.

Dieses Abdichtungsproblem tritt insbesondere bei Abscheidevorrichtungen auf, die nach dem Zyklonprinzip arbeiten und zusätzlich mit einem Unterdruck- oder Überdruckbereich arbeiten, der von den Bereichen mit anderem Druckniveau getrennt gehalten werden muß.

Ein typischer Anwendungsfall ist ein Amalgamabscheider, mit dessen Hilfe feste Amalgam-Partikel in Zahnarztpraxen einerseits aus dem Abwasser und andererseits aus dem dem Mund des Patienten abgesaugten Flüssigkeits-Luftgemisch separiert werden sollen.

Es ist deshalb die Aufgabe der vorliegenden Erfindung, eine dynamische Dichtung zwischen einem rotierenden und einem feststehenden Teil zu schaffen, bei der ohne direkte Berührung zwischen den beiden Teilen eine druckdichte Abdichtung zwischen den beiderseits der Dichtung gelegenen Bereichen erfolgt, sowie die Verwendung einer solchen Dichtung in einem Amalgamabscheider.

Bei einer gattungsgemäßen Dichtung wird diese Aufgabe durch die kennzeichnenden Merkmale der Ansprüche 1 und 10 gelöst. Vorteilhafte Ausführungsformen ergeben sich aus den Unteransprüchen.

Das Wirkprinzip der erfindungsgemäßen Dichtung besteht in einer ringförmigen Fluidschicht, die sich in einer Ringnut durch die bei der schnellen Rotation einwirkenden Gravitationskräfte bildet, und einen in diese Fluidschicht eintauchenden Trennflansch. Dabei rotiert entweder der Trennflansch oder das umgebende, die Ringnut aufweisende Baute, während das jeweils andere Bauteil stillsteht.

In Fall der Rotation der Dichtung sind stillstehendes und rotierendes Bauteil somit druckdicht über die Fluidschicht miteinander verbunden, die jedoch bis auf die stattfindende Verdunstung bei richtiger Auslegung der Dichtung keinem Verlust unterliegt und zusätzlich auch während des Betriebes leicht ergänzt werden kann.

Zwar ist es bekannt, zwei konzentrisch und mit gleicher Winkelgeschwindigkeit gemeinsam rotierende Bauteile druckdicht über einen Ringmantel aus Fluid im Falle der Rotation miteinander zu verbinden, und dadurch zwei druckmäßig voneinander getrennte Bereiche zu schaffen.

In diesem Fall rotiert jedoch der Fluidmantel mit gleicher Winkelgeschwindigkeit wie die beiden gegeneinander abzudichtenden Bauteile, so daß - außer in der Beschleunigungsphase - keine Relativgeschwin digkeiten zwischen dem Fluid und den abzdichtenden Bauteilen vorliegen. Es bestand jedoch bisher ein technisches Vorurteil dagegen, dieses Prinzip allgemein auch bei dynamischen, rotierenden Dichtungen einzusetzen, da dort erhebliche Relativgeschwindigkeiten des Fluid gegenüber dem rotierenden und/oder dem stillstehenden Bauteil auftreten, die ein gleichmäßiges, druckdichtes und damit in der Regel laminares Anliegen der rotierenden Fluidströmung an beiden Bauteilen nicht machbar erscheinen ließen.

Das umgebende der beiden Bauteile der Dichtung muß sowohl einen zur Rotationsachse bzw. oben hin offenen Ringraum bilden, indem sich die rotierende Fluidschicht als ringförmiger Zylinder aufbauen kann, als auch einen Sammelraum für das Fluid, wenn die Dichtung stillsteht, sofern die erfindungsgemäße Dichtung nicht bei jedem neuen Ingangsetzen der Rotation neu mit Fluid gefüllt werden soll.

Von der Rotationsachse her taucht in den nach innen offenen Ringraum ein Trennflansch soweit ein, daß er bei rotierender Dichtung ausreichend weit in die Fluidschicht eintaucht, so daß einerseits die Fluidschicht durch das rotierende Bauteil in ausreichend schnelle Rotation versetzt wird um eine stabile ringförmige Fluidschicht auszubilden und andererseits diejenigen Schichten der ringförmigen Fluidschicht, die dem feststehenden Bauteil benachbart sind und in der große Scherkräfte auftreten, möglichst dünn ausgebildet sind und eine möglichst große Länge in Querschnittsdarstellung aufweisen, um ein druckdichtes Anliegen der Fluidschicht an dem feststehenden Bauteil zu ermöglichen.

Von der Rotationsachse aus in radialer Richtung betrachtet, bilden die beiden beidseits des Trennflansches gelegenen Bereiche der Fluidschicht somit sogenannte "kommunizierende Röhren", die bei Druckgleichheit beidseits der Trennflansche gleiches Niveau, in diesem Falle also gleichen Abstand von der Rotationsachse besitzen. Da die vorliegende Dichtung jedoch für den Fall einer Trennung zweier Bereiche mit unterschiedlichem Druck-Niveau vorgesehen ist, wird sich der radiale Abstand der beiden Bereiche der Fluidschicht von der Rotationsachse beidseits des Trennflansches gegenläufig zueinander in Abhängigkeit vom vorliegenden Druckunterschied ändern. Die bei Druckgleichheit vorliegende Ausgangsstarke der Fluidschicht und die sich daraus ergebende Eintauchtiefe des Trennflansches muß damit um so größer sein, je größer der vorliegende Druckunterschied zwischen den beiden Bereichen und die damit verbundene Auslenkung der beiden Bereiche der Fluidschicht ist.

Eine derartige Dichtung kann nicht nur mit senkrechter Ausrichtung der Rotationsachse eingesetzt werden, sofern die durch die Rotation erzeugten Fliehkräfte so hoch werden, daß die Schwerkraft hierbei vernachläßigt werden kann. Zur Vereinfachung wird im folgenden jedoch von einer senkrechten Lage der Rotationsachse ausgegangen, mit den sich daraus ergebenden Folgen für Anordnung eines eventuellen Sammelraumes für das Fluid bei Stillstand der Dichtung.

Bei einer einseitigen Betrachtung der Dichtung in Querschnittsdarstellung besitzt der Ringraum für die Ausbildung der ringförmigen Fluidschicht eine in etwa C-frömige Innenkontur. Der untere, frei endende Schenkel dieser Kontur setzt sich dabei in einer konzentrisch zur Außenwand liegenden, nach oben ragenden ringförmigen Innenwand fort. Die dadurch gebildete ringförmige Wanne mit waagerechter Bodenfläche und damit lotrecht zur Rotationsachse dient als Sammelraum für das Fluid im Stillstand der Dichtung und muß hinsichtlich ihres Volumens größer sein als der Ringraum, in dem sich die Fluidschicht bei rotierender Dichtung aufbaut.

Dadurch ergibt sich eine zu mehr als 3/4 geschlossene Innenkontur des umgebenden Bauteils, die lediglich in ihrem oben liegenden, inneren Ringbereich offen ist. Durch diese Öffnung ragt das zweite Bauteil in der Regel mittels eines zylindrischen Bereiches in den Innenraum des umfassenden Bauteiles hinein, von dem aus sich der waagerecht und damit ebenfalls lotrecht zur Rotationsachse liegende Trennflansch im Innenraum des umgebenden Bauteils nach außen bis in die während der Rotation ausgebildete Fluidschicht hineinreicht.

Bei einsetzender Rotation der Dichtung muß das im Sammelraum befindliche Fluid durch das rotierende Bauteil in Drehung versetzt werden. Der Sammelraum kann dabei bezüglich des später benetzten Ringraumes auch an anderer Stelle der Dichtung angeordnet werden, jedoch muß sichergestellt sein, daß bei beginnender Rotation das Fluid selbsttätig allein durch die Rotation vom Sammelraum in den Ringraum fließt.

Da die Hauptschwierigkeit bei dieser Art der Dichtung darin bestand, das rotierende Fluid am stillstehenden Bauteil druckdicht über den gesamten Umfang anliegen zu lassen, und sich diese Forderung in der Regel um so besser erfüllen läßt, je größer die - in Querschnittsbetrachtung - Berührungsfläche zwischen rotierendem Fluid und stillstehendem Bauteil ist, die in der Regel durch strömungstechnisch auftretende Kavitationen an den Enden dieser Berührungsflächen etc. verringert wird, würde dies bedeuten, daß die beste Lösung darin bestanden hätte, den Trennflansch rotieren zu lassen und die Ringnut in das stillstehende Bauteil zu integrieren, da von der ringförmigen Fluidschicht die Berührungsfläche gegenüber dem umgebenden Bauteil größer ist als gegenüber dem Trennflansch.

Versuche haben jedoch gezeigt, daß geringere bauliche Abmessungen erreicht werden können, wenn das umgebende Bauteil mit der Ringnut rotiert und das Fluid in Drehung versetzt, wozu eine möglichst große Rauheit der Berührungsflächen der Ringnut mit dem Fluid von Vorteil ist. Je nach zu verwendendem Material können anstelle einer ausreichenden Oberflächenrauhigkeit auch explizit im Inneren der Ringnut angebrachte, radiale Rippen Verwendung finden.

Ebenfalls im Gegensatz zur klassischen Lehre der Strömungsmechanik stand die Lösung der druckdichten Anlage der ringförmigen Fluidschicht am eintauchenden Trennflansch:

In der Regel wird davon ausgegangen, daß ein Fluid zwischen einem bewegten und einem ruhenden Bauteil in den Grenzschichten zu den beiden Bauteilen jeweils die gleiche Geschwindigkeit wie das jeweilige Bauteil besitzt und der Ausgleich zwischen diesen Bereichen unterschiedlicher Geschwindigkeiten innerhalb des Fluids in einer turbulenten Zone innerhalb der Fluidschicht stattfindet. Wird diese turbulente Zone absichtlich verkleinert, so führt dies in der Regel zu einem Verdrängen der laminaren Strömung von einem der anliegenden Bauteile und damit zu einem Verlust der Druckdichtigkeit im vorliegenden Fall.

Im Gegensatz zu dieser Lehrmeinung, ergaben die Versuche bei der vorliegenden Erfindung ein um so besseres dichtes Anliegen der rotierenden Fluidströmung am stillstehenden Bauteil, je schmaler der Spalt zwischen dem rotierenden und dem stillstehenden Bauteil gehalten wurde.

Die erfindungsgemäße Dichtung ist besonders zum Einsatz in Abscheidevorrichtungen geeignet, die nach dem Zyklonprinzip mit hohen Drehzahlen arbeiten und bei denen rotierende gegenüber feststehenden Bauteilen druckdicht abgedichtet werden müssen, da der Zyklon gegenüber der Umgebung oder anderen Druckbereichen zusätzlich mit Unter- oder Überdruck beaufschlagt wird. Ein solcher Anwendungsfall ist ein Amalgamabscheider für Zahnarztpraxen, mit dem feste Amalgam-Partikel nicht nur aus dem Spülwasser, sondern auch dem abgesaugten FLüssigkgeits-Luft-Gemisch entfernt werden sollen, weswegen der Innenraum des Zyklons an eine Unterdruckquelle angeschlossen ist und dieser Unterdruck an den entsprechenden Absauganschluß möglichst verlustfrei weitergegeben werden muß.

Um die bei einem längeren Betrieb auftretende Abnahme des abdichtenden Fluids - in der Regel Wasser - zu ersetzen, wird in den Ringspalt zwischen rotierendem und feststehenden Bauteil mittels einer steuerbaren Düse unverschmutztes Leitungswasser zudosiert. Die auf diese Weise überschüssige Fluidmenge verläßt die Dichtung über das freie obere Ende der C-förmigen Innenkontur des umfassenden Bauteiles und gelangt infolge Rotation und Schwerkraft in den darunterliegenden Zyklon des Abscheiders und durchläuft die dort zu vollziehende Phasentrennung.

Um in der Gegenrichtung ein Eindringen von verunreinigtem Wasser bzw. Luft-Gas-Gemisch in die Dichtung zu verhindern, wird in den unter der Dichtung angeordneten Überlaufkanal ein ringförmiger Ableitwinkel eingebaut, der die teilweise radial zugeführten, zu separierende Gemische nach unten in Richtung des Zyklons des Abscheiders umlenkt und ein Aufsteigen zur darüberliegenden dynamischen Dichtung zuverlässig verhindert.

Eine Ausführungsform gemäß der Erfindung ist im folgenden beispielhaft näher beschrieben. Es zeigen:
- Fig. 1: eine erfindungsgemäße dynamische Dichtung in Querschnittsdarstellung und
- Fig. 2: einen Amalgamabscheider nach dem Zyklonprinzip unter Verwendung der erfindungsgemäßen Dichtung.

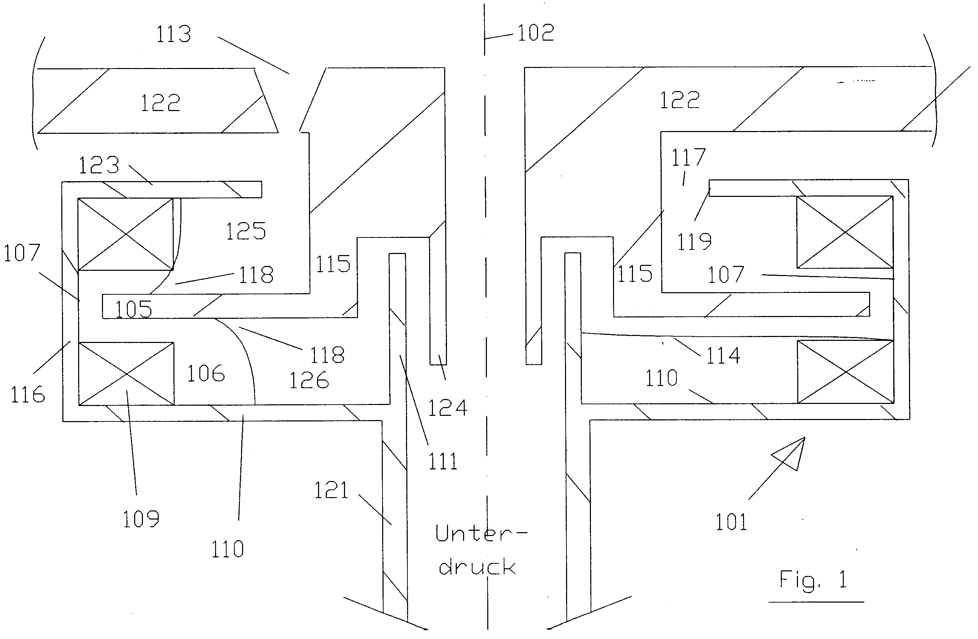

Fig. 1 zeigt eine erfindungsgemäße Dichtung in Querschnittsdarstellung, wobei sich in der linken Bildhälfte die Dichtung aufgrund der Rotation des Umfangsteiles 101 im abgedichteten Zustand befindet und in der rechten Bildhälfte aufgrund des Stillstandes auch des drehbaren Umfangsteiles 101 im undichten Zustand.

Das in der Fig. 1 dargestellte Umfangsteil 101 besteht aus einem ringförmig umlaufenden Kastenprofil mit nicht vollständig geschlossenem Querschnitt, an das sich vorzugsweise nach unten ein ringförmiger Ansatz 121 zur Verbindung mit den rotierenden Teilen der Gesamtanordnung anschließen kann. Das nicht vollständig geschlossene, kastenförmige Profil besteht aus einem unteren, waagerechten Schenkel 110, von dem innen und außen ringförmige, zylindrische Wände (Innenwand 111, Außenwand 116) aufragen. Vom oberen Ende der Außenwand 116 erstreckt sich in etwa parallel zum unteren Schenkel 110 ein oberer Schenkel 123 gegen die Rotationsachse 102 und endet in einem freien Ende 119.

Zwischen dem freien Ende 119 des oberen Schenkels 123 und dem freien oberen Ende der Innenwand 110 besteht eine Öffnung des Profiles, durch welche sich ein zylindrischer Bereich 115 des feststehenden Teiles 122 in den Innenraum des rotierenden Umfangsteiles 101 hineinerstreckt, von dem aus sich ein radial ringförmig umlaufender Trennflansch 105 etwa in der Mitte der axialen Erstreckung des Innenraumes nach außen bis in die Nähe der Innenseite 107 der Außenwand 116 erstreckt. In den Ecken zwischen dem oberen Schenkel 123 und der Außenwand 116 des Umfangsteiles 101 sowie der Außenwand 116 und dem unteren Schenkel 110 des Umfangsteiles sind radial verlaufende, im wesentlichen rechteckige Rippen 109 angeordnet, die bis in die Nähe des stillstehenden Trennflansches 105 reichen.

Zwischen dem freien Ende 119 des oberen Schenkels 123 des Umfangsteiles 101 sowie der Oberseite des oberen Schenkels 123 einerseits und dem darüber verlaufenden, radialen Bereich des feststehenden Teils 122 besteht ein ausreichender Abstand, um als Überlauf für das überschüssige Fluid der Dichtung zu dienen.

Falls innerhalb der Innenwandung 111, also zur Rotationsachse hin, eine Zuführung von Medien beabsichtigt ist, die nicht in die Dichtung gelangen sollen, erstreckt sich vom feststehenden Teil 122 aus innerhalb der zylindrischen Innenwand 111 ein weiterer zylindrischer Bereich 124 innerhalb der zylindrischen Innenwand 111 über deren oberen Ende hinweg nach unten.

In der rechten Bildhälfte der Fig. 1 ist die Dichtung in Ruhe, also bei Stillstand des drehbaren Umfangsteiles 101, dargestellt. Dabei befindet sich das Fluid im Sammelraum 114, der durch den ringförmigen Wannenraum gebildet wird, der von dem unteren Schenkel 110 sowie der aufragenden Innenwand 111 und Außenwand 116 gebildet wird. Der Flüssigkeitsspiegel erreicht in der Regel nicht den stillstehenden Trennflansch 105, jedoch befindet sich die untere Rippe 109 des Umfangsteiles 101 im Bereich des Sammelraumes 114.

Wird das Umfangsteil 102 in ausreichend schnelle Drehung versetzt, so wird das im Sammelraum 114 befindliche Fluid durch Mitnahme u.a. mittels der Rippen 109 des Umfangsteiles seine Lage verändern und aufgrund der Gravitationskraft eine ringförmige Fluidschicht 106 auf der Innenseite 107 der Außenwand 116 bilden, die eine solche Dicke hat, daß der Trennflansch 105 in diese Fluidschicht 106 eintaucht. Dabei bilden sich vor allem am Übergang zwischen der mit dem Umfangsteil 101 mitrotierenden Fluidschicht und der Ober- und Unterseite des stillstehenden Trennflansches 105 strömungstechnische Kavitationen 118, die ein Anliegen der Fluidschicht 106 am Trennflansch 105 erst weiter außen gewährleisten, als es dem Innenradius der Fluidschicht 106 entspricht.

Durch die ringförmige Fluidschicht 106 sind das feststehende Teil 122 mit dem Trennflansch 105 einerseits und das rotierende Umfangsteil 101 andererseits druckdicht miteinander verbunden, so daß der Innenraum des Umfangsteils 101 in einen oberen Bereich 125 und einen unteren Bereich 126 unterteilt sind, von denen der untere Bereich 126 mit dem Zentralraum der Dichtung innerhalb der Innenwand 111 in Verbindung steht, welcher mit Unterdruck beaufschlagt ist.

Da der obere Bereich 125 und der untere Bereich 126 ein U-Rohr bilden, verschiebt sich dadurch der Innenradius der ringförmigen Fluidschicht 106 entsprechend dem anliegenden Unterdruck im unteren Bereich 126 zur Rotationsachse 102 hin, während er im oberen Bereich 125 um etwa das entsprechende Maß zurückweicht.

Trotz dieses Zurückweichens im oberen Bereich 125 und der zusätzlich zu berücksichtigenden radialen Auswirkung der Kavitation 118 muß ein Anliegen der Fluidschicht 106 an dem Trennflansch 105 auch auf der mit dem höheren Druck beaufschlagten Seite gewährleistet sein, um eine Druckdichtheit der dynamischen Dichtung bieten zu können.

Zu diesem Zweck muß sich der Trennflansch 105 radial deutlich weiter nach außen erstrecken, als sich das freie innere Ende 119 des frei endenden oberen Schenkels 123 des Umfangteiles 101 radial nach innen erstreckt.

Vorzugsweise erstreckt sich der Trennflansch 105 bis nahe gegen die Innenseite 107 der Außenwand 116.

Im einzelnen hängt die Dimensionierung der Dichtung nicht nur vom Druckunterschied zwischen den beiden Bereichen 125 und 126 und der Drehzahl des rotierenden Teiles ab, sondern auch von Viskosität und spezifischem Gewicht des Fluids 106, bei dem es sich beispielsweise auch um ein schweres Gas handeln könnte.

Bei einer Drehzahl von 2800 Umdrehungen pro Minute und einem Durchmesser der Innenseite 107 der Außenwand 116 von 100mm erwies sich bei einem Durchmesser der Außenseite der Innenwand 111 von 70mm eine Höhe der Außenwand von 11mm als ausreichend bei einem in axialer Richtung mittig angeordnetem Trennflansch 105 von 2mm Dicke, der bis auf einen Ringspalt von umlaufend 2mm an die Innenseite 107 der Außenwand 116 heranreichte, wenn hierbei der obere Bereich 125 im Innenraum des Umfangsteiles 101 an Umgebungsdruck lag, der untere Bereich 126 dagegen an einem Unterdruck von etwa 0,15 mbar.

Da in der Regel Wasser als einfachstes zu handhabendes Fluid für die Abdichtung verwendet wird, können sich bei längerer Benutzung Verluste an Fluid durch Verdunstung etc. ergeben. Um dennoch die Dichtigkeit aufrecht zu erhalten, wird über eine Bespüldüse 113, die sich im feststehenden Teil 122 oberhalb des Ringspaltes 117 zwischen oberem Schenke 123 des rotierenden Umfangteils 101 und dem konzentrisch weiter innen verlaufenden feststehenden Teils 122 befindet, permanent oder zeitlich gesteuert, Fluid, in der Regel Wasser, in die Dichtung zugeführt. Dabei wird unverschmutztes Reinwasser, in der Regel ist Leitungswasser ausreichend, zugeführt, um sicherzustellen, daß keine Feststoff Partikel etc. durch Ablagerung in der Dichtung deren Funktion beeinträchtigen. Sollte auf diese Weise zuviel Fluid zugeführt werden, so baut sich die ringförmige Fluidschicht 6 bis zu einer solchen Dicke auf, bei der sie das freie innere Ende 119 des oberen Schenkels 23 des rotierenden Umfangsteils 101 erreicht, welches als Wehr wirkt, und über das hinweg überschüssiges Fluid radial nach außen aufgrund der Gravitationskraft geführt wird.

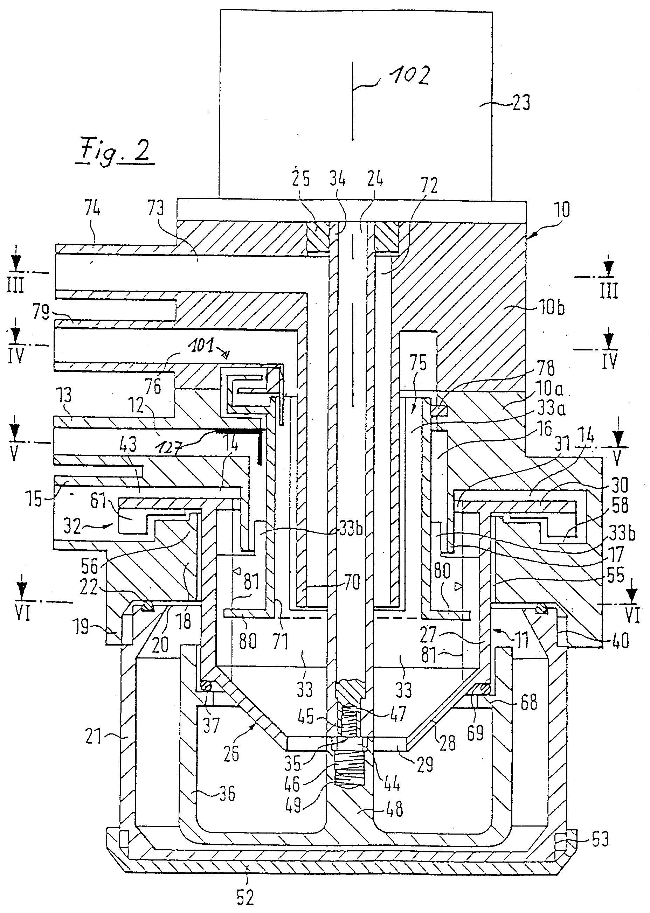

Der in Fig. 2 dargestellte Amalgamabscheider weist in der linken Bildhälfte bereits die erfindungsgemäße Dichtung 101 auf, während in der rechten Bildhälfte noch die ursprünglich vorhandene berührende Ringdichtung 78 zu erkennen ist.

Der Amalgamabscheider der Fig. 2 besteht aus einem Gehäuse 10 mit einem unteren Teil 10a und einem oberen Teil 10b. Im unteren Teil 10a befindet sich die Zentrifuge 11. Über den Einlaßkanal 12 wird tangential das Abwasser von der zahnärztlichen Behandlungseinheit zugeführt, indem an den Einlaßstutzen 13 eine entsprechende Schlauchleitung angeschlossen wird. Unterhalb des Einlaßkanales 12 befindet sich ein ringförmiger Auslaßraum 14 für aus der Zentrifuge 11 austretendes Reinwasser, der mit einem Auslaßkanal 43 für Reinwasser verbunden ist, mit einem Auslaßstutzen 15 zum Anschluß einer entsprechenden Schlauchleitung.

Über den Anschlußstutzen 76 wird ein verunreinigtes Luft-Flüssigkeits-Gemisch dem Amalgamabscheider zugeführt, wie es aus dem Mund der Patienten abgesaugt wird. Die Zuführung erfolgt über Ansaugen mittels Unterdruck, der an den Stutzen 74 des Saugkanales 73 angelegt wird.

Unterhalb der Zentrifuge 11 befindet sich der Sammelbehälter 36 für das abgeschiedene Amalgam, der im Betrieb der Zentrifuge mit dieser rotiert und in den das Amalgam über eine Schräge 28 und eine Durchlaßöffnung 29 konzentrisch am unteren Ende der Schräge 28 geleitet wird. Umschlossen wird der Sammelbehälter 36 vom Transportbehälter 21, der im Betrieb des Abscheiders mit dessen Gehäuse 10 verbunden ist.

Die Zentrifuge selbst wird durch eine Außenwandung 81 und eine konzentrische, rohrförmige Innenwandung 71 gebildet, welche in ihrem unteren Ende einen radial verlaufenden Trennflansch 80 aufweist. Bei Rotation der Zentrifuge bildet sich durch Zuführung von verschmutzter Flüssigkeit auf der ringförmigen Außenwand 27 der Zentrifuge 11 eine ringförmige, koaxial zur senkrechten Rotationsachse 102 ausgebildete ringförmige Flüssigkeits Schicht 81 bis zu einer solchen Dicke aus, bei der sie das innere Ende des Sperrflansches 30 erreicht, der axialen oberen Begrenzung der Zentrifuge 11. Über diesen Sperrflansch 30 hinweg läuft das Reinwasser ab, während sich aufgrund der Gravitation das Amalgam und alle anderen schweren Feststoffe eng an der Innenseite der Außenwand 27 der Zentrifuge ablagern und bei Stillstand der Zentrifuge in den Sammelbehälter 36 hinabrutschen.

In die ringförmige Fluidschicht 81 taucht auch der Trennflansch 80 ein, der Teil der Zentrifuge ist und mit dieser rotiert, so daß das innerhalb des mit dem Trennflansch 80 verbundenen Trennrohr 71 zugeführte Gas-Flüssigkeits-Gemisch sich in dem über den Anschlußstutzen 74 angelegten Unterdruckbereich der Zentrifuge befindet. Nach Umlenken der Gaspartikel um das untere Ende des inneren Saugrohres 71 herum werden die Gaspartikel nach oben zum Saugkanal 73 hinabgesaugt, während Flüssigkeits- und Feststoffanteile in den Fluidmantel 81 der drehenden Zentrifuge eingebracht werden und dort der Separierung unterliegen.

Die mechanische Verbindung des Trennrohres 71 des Trennflansches 80 und der Außenwand 27 der Zentrifuge geschieht über radial verlaufende Rippen 33b.

Das obere Ende des rotierenden Trennrohres 71 muß - in der Nähe des Ringraumes 76 für die Zuführung des Luft-Gas-Gemisches - gegenüber dem stillstehenden Gehäuse 10 abgedichtet werden, wofür in der Vergangenheit die Ringdichtung 78 verwendet wurde, wie in der rechten Bildhälfte noch dargestellt. Aufgrund der hohen Arbeitsdrehzahlen der Zentrifuge ist eine solche berührende Dichtung trotz ausreichender Schmierung dem schnellen Verschleiß unterworfen.

In der linken Bildhälfte ist die erfindungsgemäße berührungsfreie Dichtung dargestellt, deren Prinzip anhand Fig. 1 erläutert wurde.

Der Überlauf der Dichtung mündet in dem Ringraum 12 zur Zuführung des verunreinigten Wassers, so daß das aus dem Überlauf der dynamischen Dichtung abfliessende Fluid der normalen Separierung durch die Zentrifuge zugeführt wird.

Um auf diesem Weg nicht in umgekehrter Richtung verunreinigtes Wasser aus dem Ringraum 12 in die dynamische Dichtung eindringen zu lassen, ist zur inneren, oberen Begrenzung des Ringraumes 12 ein ringförmiger Ablenkwinkel 127 am feststehenden Gehäuse 10 so angeordnet, daß dessen oberer, waagerechter Winkel an der Oberseite des Ringraumes 12 angeordnet ist und dessen nach unten abstrebender, ringförmig axialer Bereich noch radial außerhalb der Mündung des Überlaufes der dynamischen Dichtung 101 den Ringraum ausreichend weit axial nach unten abschottet, um sowohl das zugeführte Schmutzwasser aus dem Stutzen 13 als auch den Überlauf aus der dynamischen Dichtung 101 zuverlässig der Zentrifuge 11 im unteren Bereich des Abscheiders zuzuführen.

## Patentansprüche

1. Berührungslose Dichtung zur Abdichtung zwischen einem rotierenden und einem stillstehenden, konzentrischen Teil,
**gekennzeichnet durch**
a) eine in einen Innendurchmesser eingearbeitete Ringnut (108), deren offene Seite (103) konzentrisch zur Rotationsachse (102) liegt,
b) einen aus der Richtung der Rotationsachse (102) in den Ringraum (104) der Ringnut (108) eintauchenden ringförmigen Trennflansch (105), dessen Außenflächen einen geringen Abstand zu den Innenflächen der Ringnut (108) einhalten,
c) eine Fluidfüllung im Ringraum (104) der Ringnut (108), die bei Rotation der Dichtung eine ringförmige Fluidschicht (106) mit solcher Dicke auf der Innenseite (107) der Außenwand (116) der Ringnut (108) bildet, daß der Trennflansch (105) in die Fluidschicht (106) hineinragt,
d) einen mit dem Ringraum (104) verbundenen Sammelraum für das Fluid, in dem sich bei Stillstand der Dichtung das Fluid sammelt und von dem es bei einsetzender Rotation der Dichtung in den Ringraum (104) der Ringnut (108) aufgrund der Fliehkraft strömen kann und
e) wobei bei rotierender Dichtung entweder das die Ringnut (108) aufweisende Teil oder der Trennflansch (105) um die Rotationsachse (102) rotiert.

2. Dichtung nach Anspruch 1,
**dadurch gekennzeichnet, daß**
die Rotationsachse (102) senkrecht angeordnet ist und von der im wesentlichen C-förmigen, einseitigen inneren Querschnittskontur der Ringnut (108) sich dser tieferliegende Schenkel (110) weiter zur Rotationsachse (102) hin fortsetzt und in eine im wesentlichen konzentrisch zur Innenseite (107) der Außenwand (116) liegende, ringförmige Innenwand (111) übergeht, wobei das Volumen zwischen Innenwand (111) und Außenwand (116) als Sammelraum dient und größer ist als der Ringraum (104) der Ringnut (108).

3. Dichtung nach Anspruch 1 oder 2,
**dadurch gekennzeichnet, daß**
das rotierende Teil an den dem nicht rotierenden Teil zugewandten, vom Fluid benetzten Naßflächen eine möglichst rauhe Oberfläche aufweist.

4. Dichtung nach einem der vorhergehenden Ansprüche,
**dadurch gekennzeichnet, daß**
an den Naßflächen des rotierenden Teiles radial zur Rotationsachse (102) Rippen (109) im Bereich der Fluidschicht (106) angeordnet sind, die möglichst nahe an das nicht rotierende Teil heranreichen.

5. Dichtung nach einem der vorhergehenden Ansprüche,
**dadurch gekennzeichnet, daß**
das rotierende Bauteil das umgebende Bauteil mit der Ringnut (108) ist und die Rippen (109) in den Ecken zwischen der Innenseite (107) und den Stirninnenseiten (112) der Ringnut (108) angeordnet sind.

6. Dichtung nach Anspruch (5),
**dadurch gekennzeichnet, daß**
die Rippen (109) im wesentlichen rechteckig sind und eine von den Stirninnenseiten (112) aufragende Höhe von weniger als einem Millimeter aufweisen.

7. Dichtung nach einem der vorhergehenden Ansprüche,
**dadurch gekennzeichnet, daß**
mittels einer steuerbaren Düse (118) nach Bedarf Fluid in den Ringspalt (117) zwischen rotierendem Teil und feststehendem Teil eingebracht wird zum Ausgleich des durch Verdunstung etc. verlorengehenden Fluids.

8. Dichtung nach einem der vorhergehenden Ansprüche,
**dadurch gekennzeichnet, daß**
die Ringnut (108) durch ein ringförmig umlaufendes, im Querschnitt kastenförmiges Hohlprofil angeordnet ist, bei dem ein der Rotationsachse (102) zugewandter, ringförmiger Bereich der oberen Stirnfläche fehlt, und durch welchen ein im wesentlichen winklig ausgebildetes, ringförmiges Schwert (114) hineinragt, welches durch einen axialen zylindrischen Bereich (115) in den Innenraum des Profiles axial hineinragt und an den sich der Trennflansch (105) in radialer Richtung anschließt.

9. Verwendung einer dynamischen Dichtung, insbesondere nach einem der vorhergehenden Ansprüche, an einer Vorrichtung zum Abscheiden feiner Feststoffpartikel, insbesondere einem Amalgamabscheider zum Separieren der Amalgampartikel aus dem Wasser-/Luft-Gemisch einer Zahnarztpraxis, mit
- einer von einem feststehenden Gehäuse (10) umschlossenen, im Betrieb des Abscheiders rotierenden Zentrifugentrommel (26),
- einem mit Unterdruck beaufschlagten Saugkanal (73) zum Absaugen des gereinigten Luftanteiles und
- einem drehfest mit der Zentrifugentrommel verbundenen, nach oben aus der Zentrifugentrommel herausragenden Trennrohr (71) zum Einleiten des verunreinigten Luft-/Wasser-Gemisches,
**dadurch gekennzeichnet, daß**
für die Abdichtung des oberen Endes des Trennrohres (71) gegenüber dem feststehenden Gehäuse (10) eine dynamische, berührungsfreie Dichtung nach einem der Ansprüche 1 bis 9eingesetzt wird.
